# EUROPEAN PATENT APPLICATION

(11) **EP 1 111 937 A1**
(43) Date of publication of application: **27.06.2001**
(21) Application number: 99125568.8
(22) Date of filing: 21.12.1999
(51) Int. Cl.: H04N 17/02

(54) **Method for generating a measure for classifying video signals**

(71) Applicant: Sony International (Europe) GmbH, 10785 Berlin (DE)
(72) Inventor: Dilly, Altfried, c/o Sony Int.(Europe) GmbH, 70736 Fellbach (DE); Wagner, Peter, c/o Sony Int.(Europe) GmbH, 70736 Fellbach (DE)
(74) Representative: MÜLLER & HOFFMANN Patentanwälte

(57) **Abstract**

A method and an apparatus for generating a characterization measure for classifying video signals are suggested. On the basis of a received video signal (CVBS) at least a part of a video signal standard is generated. By comparing the received video signal (CVBS) with the video signal standard with respect to its temporal position and/or its time course a variety of parameter values (D11, V11, ..., D1i, V1i, D21, V21 D2i, V2i) is derived characterizing the received video signal and in particular the respective video signal source. The derived parameter values may be used to tune the video signal processing module and the display unit to achieve best image quality.

## Description

The invention relates to a method and to an apparatus for generating a characterization measure for classifying video signals according to claim 1 and to the preamble of claim 16, respectively.

It is well-known in the art that besides the different standards for video signals, such as PAL or NTSC, video signals received by any receiving section of an apparatus for displaying images carry deviations with respect to the video signal standard.

These deviations from the signal standard are on the one hand due to physical processes being independent from the sending apparatus, such as signal distortions or deviations according to electromagnetic interactions with other signal sources or due to energy dissipation within the transmission channel. On the other hand, there exist signal deviations with respect to the video signal standard which are due to the particular apparatus generating and transmitting the video signal to the receiving section.

Therefore, independent from any signal dissipation and from superposition with other external signals the received video signal comprises deviations from the video signal standard which may be characteristic for the device which generated the received video signal. In particular this may be the case for deviations occurring in a constant and reproducible manner with respect to the structure of the video signal for each image line or the whole image being transmitted with the received video signal.

To achieve the best possible image quality, the apparatus for evaluating the video signal and for imaging the picture corresponding to the received video signal has to be adapted to the characteristics of the image generating and/or transmitting apparatus.

EP 0 806 876 discloses a method to generate a switching signal based on a special measured signal property to avoid severe degradations caused by the following signal processing.

In that known approach it has been suggested to distinguish received CVBS-signals (color video blanking signal; FBAS-signal) with respect to their standard or non-standard structure, respectively. The method and apparatus suggested in EP 0 806 876 employ numerical properties between the color carrier signal and the horizontal synchronization signal.

Besides that distinction into standard and into non-standard video signals there is a need to have a detailed classification of received video signals according to the large variety of signal sources, such as VCR-, DVB-, DVD-devices, terrestrial satellite receivers, game consoles, computer graphical equipment, or the like.

Therefore, it is an object of the present invention to provide a method and an apparatus for generating a characterization measure for classifying video signals, which allow for the detailed and reliable discrimination of the different sources of video signals.

The object is a achieved with the inventive method according to claim 1. Furthermore, the object is achieved by the apparatus according to the generic part of claim 16 with the characterizing features of claim 16. Advantageous embodiments of the inventive method and of the inventive apparatus for generating a characterization measure for classifying video signals are within the scope of the respective dependent subclaims.

An essential idea of the inventive method is to first of all receive from a signal source as an input signal a video signal, in particular a CVBS-signal, which comprises at least a first and a second signal component. The input signal may also be a S-VHS signal or the like. In a further step of the inventive method a first and/or a second test signal is derived from said input signal, which essentially comprise the first component of the input signal. Further, an evaluation signal is derived from said input signal, which comprises essentially the second signal component of the input signal. From that particular evaluation signal a compare signal is derived, which represents a predefined and given standard for a video signal. Then a comparison is carried out at least between said first and/or second test signal and the compare signal, in particular with respect to predetermined signal characteristics. Finally, on the basis of said comparison parameter values are calculated, which characterize differences of at least said first and/or second test signal with respect to said compare signal in the sense of a video standard.

The basic concept of the inventive method for generating a characterization measure for classifying video signals is therefore to extract from the transmitted and received video signal particular signal components, which are characteristic for the video source in the sense of a particular difference or deviation with respect to the video signal standard.

The characterization measure may be a single number or quality value. But it may also consist of a variety of values in form of a characterization/classification vector, or the like.

Therefore, basic signal elements or components from the received video signal are extracted and on the basis of these extracted elements an internal video standard is generated, which is synchronous with the expected temporal structure of the received signal.

The differences between the actual signal and the video standard appear as differences in the amplitude relationship and/or as differences in the time course and temporal positions of particular signal features.

The video signal standard is fixed and chosen by pre-processing step within a receiving/tuning unit as a reference prior to the generation of the characterization measure and it may be the PAL or NTSC standard or the like.

In a particular embodiment of the inventive method a pulse for the horizontal synchronization is used as a first signal component for deriving said first and/ or second test signal.

Further, a color carrier signal component is used as a second signal component for deriving said evaluation signal.

Using a horizontal synchronization pulse and a color carrier signal component is advantageous, since the temporal and phase relationships between these signal characteristics are well-defined for most video standards.

In a further embodiment of the inventive method a synthetic horizontal synchronization pulse is generated as a compare signal.

Therefore, it is possible to compare that synthetic and therefore theoretical horizontal synchronization pulse with the shape, the amplitude and the time course and slope of a received horizontal synchronization pulse.

For that reason, a synthetic horizontal synchronization pulse is generated and used. This synthetic and artificial pulse represents a normalized and ideal standard for a horizontal synchronization pulse. In the absence of any deviation the actual synchronization pulse should have the structure of said ideal standard with respect to its position in time, its amplitude, and its timecourse.

For extracting and deriving the actual horizontal synchronization pulse from the received video signal, it is advantageous to use a Hsync-slicer module for separating from said received video signal said first signal component and thereby deriving said first or second test signal.

On the other hand, it is advantageous to use a color decoder and synchronization separator module in standard manner for separating a color carrier signal component from said received input video signal as said second signal component.

It is further advantageous to supply the second signal component, i.e. in particular the color carrier signal component, to a highly stable PLL-module for generating the proper temporal or time positions and for triggering and/or forcing a H-pulse generator module at said temporal positions to generate said compare signal, i.e. said internal synthetic horizontal synchronization pulse.

Said color decoder and synchronization separator module can furtheron be used to separate said horizontal synchronization pulse from said input video signal as said first signal component and thereby to generate a second or first test signal to achieve a more detailed discrimination of received video signals with respect to the video signal standard.

The inventive method therefore presents two sources for extracting the actual horizontal synchronization pulse as first and/or second test signals, namely by using a H-slicer module and by using a color decoder and synchronization separator. These extracting techniques have equal importance for the inventive method which works with one as well as with two test signals.

For example the temporal drift values of the rising edge of the first and/or second test signals are calculated as parameter values, in particular regarding a given amplitude threshold with respect to the temporal position of the synthetic horizontal synchronization pulse of the compared signal.

In that case, according to the video signal standard, the rising edge of the received horizontal pulse must achieve a given amplitude threshold at a predefined time point. Therefore, the received video signal can be characterized by measuring and calculating the distance in time between the actual threshold passage time and the expected theoretical time.

On the other hand, video signals can be compared to the video signal standard by measuring and calculating the drift in amplitude of the rising edge of the first and/or second test signal, in particular with regard to a given distance with respect to the temporal position of the synthetic horizontal synchronization pulse of the compared signal according to the video signal standard.

Different video signal sources may have influence on a multiplicity of positions within a video line signal, within a complete image and/or even between a series of complete video images.

Therefore, in a further embodiment of the method for classifying video signals a set of parameter values is calculated according to a predefined set of temporal positions within a certain input signal or received video signal.

This is a particular advantage, because the video signals produced by different sources can be analyzed in advance and then a set of temporal positions at which the produced signal will be altered by the particular device can be defined in a predefined and reproducible manner. Therefore, measuring the deviations of the received signal at the temporal positions of that predefined set produces the characterizing features of the signal producing device in the sense of a fingerprint or the like.

For that reason the temporal positions may be distributed within a single video line signal, over a multiplicity of video line signals within a single image signal and/or over several more or less successive image signals.

Additionally, a characterization measure may be obtained with the method by calculating and/or analyzing a convolution between said first and/or second test signal and said synthetic horizontal synchronization pulse. The evaluation of the convolution is less noise sensitive, as this method evaluates the entire signal and is not restricted to the edges.

For the evaluation of the set of parameter values characterizing differences between the actual video signal and the video signal standard it is advantageous to calculate from said set of parameter values or from a series of subsets thereof particular statistical parameters. From the basic drift values statistical means, statistical variances and/or statistical standard deviations may be calculated to characterize the signal differences besides the set of parameter or drift values per se.

Furthermore, higher statistical moments calculated may also be advantageous for a characterization.

To achieve a complete classification of the received video signals by means of classifying the differences between the actual signal and the theoretical signal the parameter values may by compared to a predefined table of parameter values. By this table look-up method adjusting parameters for achieving best image quality may be assigned to a given set or to a given vector of parameter values. Further, the evaluation can be carried out more complex. In particular, threshold intervals might be defined in the table of predetermined parameters characterizing the different video sources, so that a given vector of measured and calculated characteristics has not to fit a predefined vector exactly, but it has to fit into the neighborhood of a given vector in some sense. Alternatively or additionally different algorithms for further processing may be assigned in accordance with the comparison process.

Conventional apparatuses for distinguishing video signals, in particular according to EP 0 806 876, comprise a receiving section for receiving video signals. Furthermore, a Hsync-slicer module is provided for deriving and for separating a horizontal synchronization pulse from said video signal as a first test signal. A color decoder and synchronization separator module for deriving and for separating at least a color carrier signal from said video signal received as a second signal component is provided.

The apparatus according to the invention, in particular for carrying out the inventive method for classifying video signals, is characterized by a H-pulse generating section for generating from said second signal component a synthetic horizontal synchronization pulse as a compare signal. Further, a comparison section is provided, for comparing at least said first test signal with said compare signal and for generating and providing parameter values, which characterize differences of the compared signals.

In a particular advantageous embodiment of the inventive apparatus said H-pulse generating section comprises a highly stabilized phase locked loop module for deriving temporal positions for said compare signal to be generated. Further, said H-pulse generating section comprises a H-pulse generator to be triggered by said phase locked loop module at said temporal positions to generate at each time said synthetic horizontal synchronization pulse as said compare signal.

In a further preferred embodiment said color decoder and synchronization separator module is adapted for deriving and separating said single part from said video signal as a second test signal to derive and separate a horizontal synchronization pulse.

Finally, a comparison section can advantageously be provided, which comprises first and second rising edge deviation calculation units for comparing said first and said second test signal with said compare signal. Furthermore, said comparison section further comprises first and second evaluation processors, which are assigned to said first and to said second calculation units, respectively, for evaluating the comparison results and thereby for deriving a set of parameter values for characterizing the video signals, in particular to a given video signal standard on the basis of a predefined comparison pattern.

The inventive method and the inventive apparatus for generating a quality value for classifying video signals will be explained in more detail by means of schematical drawings on the basis of illustrative embodiments, in which
- **Fig. 1**: shows a general CVBS-signal:
- **Fig. 2**: shows a block diagram of an embodiment for the inventive apparatus carrying out the inventive method;
- **Fig. 3A to 3C**: explain in a schematical manner the definition of different signal deviations to be evaluated for the classification of video signals.

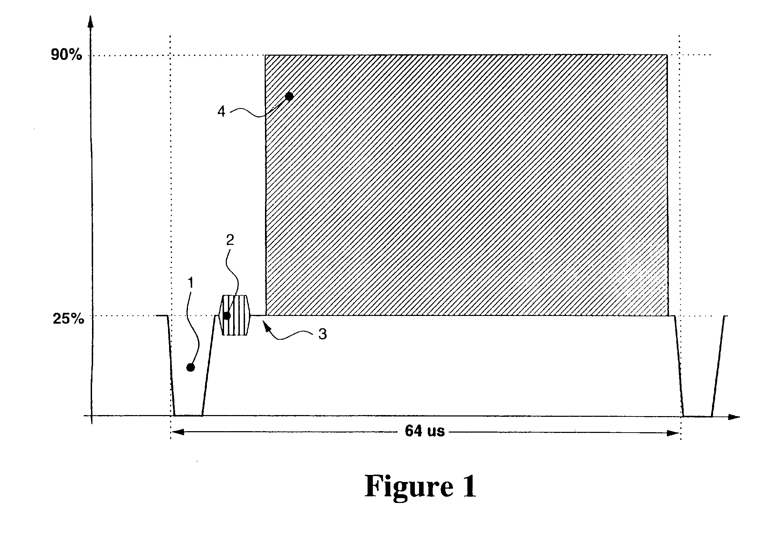

Fig. 1 illustrates in a schematical manner the theoretical time course or slope, i.e. the amplitude-time relationship, of a standard color video signal (CVBS).

A general section of a CVBS-signal begins with the horizontal synchronization pulse 1, which is also denoted by Hsync. That pulse Hsync does not contain picture information, but indicates that the information of a next video line or next image line will follow and that therefore the imaging means has to jump to the next display line.

The Hsync follows a color carrier burst 2, which is the basis to derive the color carrier CC. The color carrier burst 2 does not contain phase information. To derive the latter the signals for two successive video lines are evaluated.

The next section 3 of the CVBS-signal is a zero-luminance reference value. That zero-luminance reference value defines the color "black" for the video image. The essential information for the video line to be displayed is contained in the next section 4 of the CVBS-signal.

From Fig. 1 it can be seen that the total image information is contained essentially with a relative amplitude window ranging from 25 % to 90 %, where 25 % defines an image point or dot with zero-luminance, i.e. the color black.

Essentially for most video signals, and in particular for the CVBS-signal, is a particular and fixed time and phase relationship between the synchronization pulse Hsync 1 and the high frequency color carrier burst 2 among other color carrier signals contained in the CVBS-signal, or the like.

Only on the basis of a fixed relationship in time and phase between different signal components a comparison between the actual received video signal and an internal video standard can be carried out. For that reason different signal components must be coherent in some sense, i.e. they have satisfy certain and fixed relationships with respect to each other.

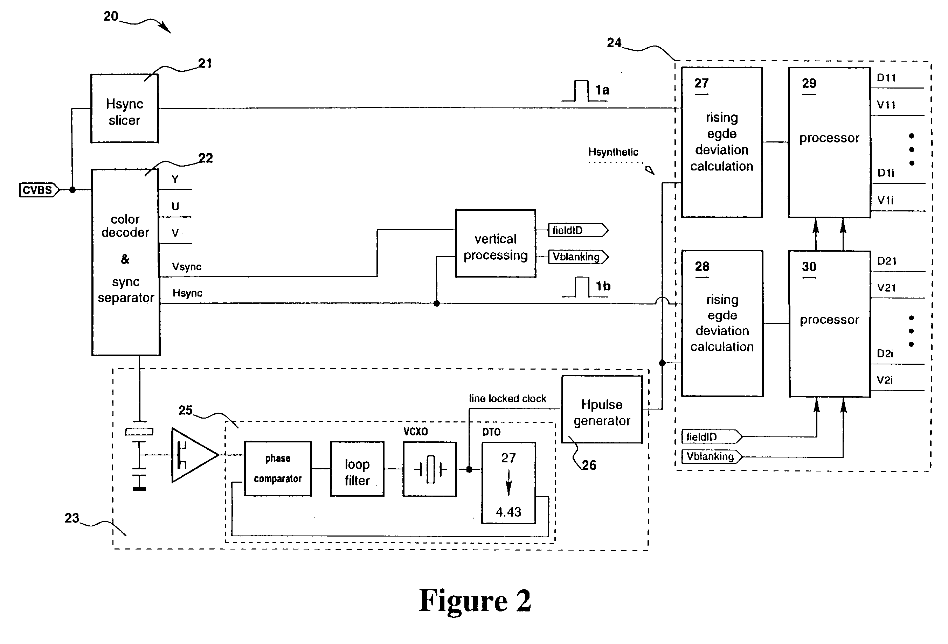

Fig. 2 shows a block diagram for an embodiment of the inventive apparatus carrying out the inventive method for generating a quality value for classifying video signals.

An incoming CVBS-signal is received by a Hsync-slicer 21, which extracts and separates from the input CVBS-signal the actual horizontal synchronization pulse Hsync which is then supplied as a first test signal la to a comparison section 24 of the apparatus 20.

On the other hand, a color decoder and synchronization separator 22 also receives the original CVBS-signal and separates therefrom - in a different manner - also a horizontal synchronization pulse Hsync as a second test signal 1b which is then also supplied to the comparison section 24 of the apparatus 20.

The color decoder and synchronization separator 22 separates a further signal component from the CVBS-signal which is then supplied to a H-pulse generating section 23. A sub-section of the H-pulse generating section 23 is the so-called PLL or phase locked loop 25 being adapted to separate from the CVBS-signal or its second signal component 2 a highly stable color carrier signal component CC and in particular the time and phase relationship of the color carrier signal component with respect to the horizontal synchronization pulse Hsync. Therefore, the loop 25 contains a phase comparator, a loop filter and in particular, a voltage controlled crystal oscillator VCXO that generates and outputs a highly stable frequency.

Said frequency is an integer multiple of the line frequency of the received video signal according to a certain video signal standard such as PAL or NTSC. For instance, for the PAL system the line frequency is 15.625 kHz and the line coupled frequency is 27 MHz which is 1728 times the aforementioned line frequency.
The frequency of 27 MHz is supplied to a discrete time oscillator DTO which divides down said input frequency of 27 MHz to a certain and constant fraction which should correspond to the expected frequency of 4.43 MHz of the color carrier signal of the received input signal. The output signal of said DTO is fed back to said phase comparator. If the DTO output is not equal to the color carrier signal with respect to phase frequency of 4.43 MHz a control signal is generated and fed into the VCXO to speed up or slow down the oscillation frequency of the VCXO.

Due to the feedback process VCXO generates a highly stable frequency of 27 MHz according to said comparison with the received color carrier frequency of 4.43 MHz which is highly stable generated by the sending unit.

The highly stable clock signal of 27 MHz is then coupled to H-pulse generator section 26 where the input frequency of 27 MHz is divided down by a factor of 1728 to derive the line frequency of 15.625 kHz for the PAL system. I. e., for each 1728^{th} pulse of the 27 MHz input signal H-pulse generator 26 generates the synthetic H-pulse Hsynthetic which is then compared to the received H-pulse Hsync line by line.

Therefore, it is essential for the inventive method to compare the color carrier frequency being highly stable generated in the sending unit against the separated Hsync frequency or pulse of the received CVBS-signal from line to line.

When carrying out the inventive method a reference time has to be chosen. Therefore, the first correctly received and separated H-pulse Hsync is chosen and a synthetic H-pulse Hsynthetic is generated simultaneously. That means, the first received H-pulse is a reference pulse and generates the starting point of the inventive method. Starting with said particular reference in time the synthetic H-pulses Hsynthetic are generated and compared each at a time with the following and succeeding actual H-pulses Hsync la and 1b for each line of the video signal, i. e. line by line. Therefore, the changes of the test signals la and 1b line by line and with respect to the compare signal of the synthetic H-pulse Hsynthetic are collected and evaluated by the inventive method.

For the evaluation the comparison module or comparison section 24 consists of two independent rising edge deviation calculation units 27 and 28 each of which being assigned to the first and the second test signal la and 1b derived from the CVBS-signal, respectively.

The first and the second test signal la and 1b are fed to the rising edge deviation calculation units 27 and 28, respectively, together with the artificial and synthetic horizontal pulse Hsynthetic.

Within the rising edge deviation calculation units 27 and 28 a comparison between the separated actual signals or test signals la and 1b and the video standard according to the synthetic H-pulse Hsynthetic is carried out.

The result of the comparison from the rising edge deviation calculation units 27 and 28 are supplied to independent processors 29 and 30, respectively, in which the further evaluation of the differences between the actual signals and the synthetic signals is performed, in particular to achieve a more detailed classification of video signals and the variety of video signal sources.

In the shown example, the processor 29 generates a set of signals D11, V11 to Dli, Vli and the processor 30 generates a set of signals D21, V21 to D2i, V2i. In this notation D indicates the drift of the respective test signal to the compare signal, V indicates the variance of the respective test signal, the first number indicates the first or the second test signal and the second number indicates the line within the video picture from that the respective test signal was derived.

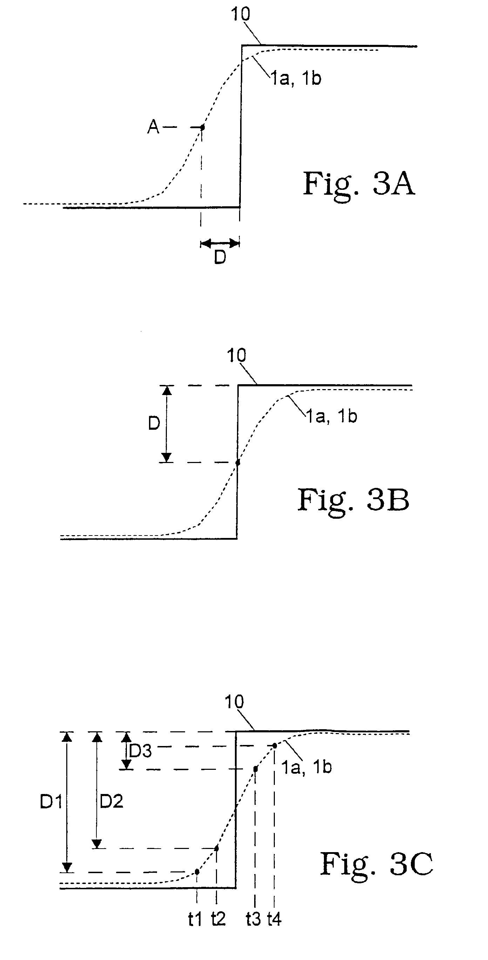

Figs. 3A to 3C show different time relationships between the synthetic horizontal synchronization pulse Hsynthetic 10, i.e. the compare signal 10, and the test signals la and 1b to be evaluated.

In Fig. 3A the actual H-pulse within the received DVBS-signal, i.e. the test signals la and 1b, is compared to the time position of the compare signal 10 with respect to a certain and predetermined amplitude threshold A. As a drift value D the time difference between the position of the rising edge of the synthetic compare signal 10 and the passage of the course of the test signals la and 1b through the amplitude threshold A is derived.

In Fig. 3B the amplitude difference D between the synthetic compare signal 10 and the test signals la and 1b with respect to given time position is evaluated.

In Fig. 3C it is schematically shown how a set of characterizing features or drift values D1 to D4 can be derived from the difference of the time course of the test signals la and 1b in comparison with the synthetic compare signal 10.

For a given set or vector of time points tl to t4 the test signals la and/or 1b are scanned, i.e. the amplitude differences D1 to D4 with respect to the compare signal 10 are measured for the given set of time points t1 to t4. The result is a vector of drift values D1 to D4 characterizing the time course and in particular the differences between the actual signal and the synthetic or standard signal.

## Claims

1. Method for generating a characterization measure for classifying video signals, comprising the steps of
- receiving from a signal source as an input signal a video signal (CVBS) comprising at least first and second signal components (1, 2),
- deriving from said input signal (CVBS) at least a first (1a) and/or second test signal (1b) essentially comprising said first signal component (1),
- deriving from said input signal (CVBS) an evaluation signal (2a) on the basis of said second signal component (2),
- generating from said evaluation signal (2a) a compare signal (10) being representative to some predefined standard for video signals,
- comparing at least said first (1a) and/or second test signal (1b) with said compare signal (10) with respect to predetermined signal characteristics and
- calculating on the basis of said comparison parameter values (D1y, D2y, V1y, V2y) characterizing differences of at least said first (la) and/or second test signal (1b) with respect to said compare signal (10).

2. Method according to claim 1, **characterized by**
using a pulse for horizontal synchronization as said first signal component (1) for deriving said first (1a) and/or second test signal (1b).

3. Method according to any of the preceding claims, **characterized by**
using a color carrier signal as said second signal component (2) for deriving said evaluation signal (2a).

4. Method according to any of the preceding claims, **characterized by**
generating a synthetic horizontal synchronization pulse (Hsynthetic) as a compare signal (10).

5. Method according to claim 5, **characterized by**
using a synthetic horizontal synchronization pulse (Hsynthetic) representing a normalized and standard horizontal synchronization pulse with respect to its position in time, its amplitude and course within the video signal.

6. Method according to any of the preceding claims, **characterized by**
using a H-slicer module (21) for separating a horizontal synchronization pulse from said video signal (CVBS) as said first signal component (1) and thereby deriving said first test signal (1a) or second test signal (1b).

7. Method according to any of the preceding claims, **characterized by**
using a color decoder and synchronization separator module (22) for separating a color carrier signal from said video signal (CVBS) as said second signal component (2).

8. Method according to any of the preceding claims, **characterized by**
supplying said second signal component (2) to a highly stable PLL-module (25), thereby generating temporal positions and triggering a H-pulse generator module (26) at said temporal position to generate a said compare signal (10).

9. Method according to any of the claims 7 or 8, **characterized by**
using said color decoder and synchronization separator (22) for separating said horizontal synchronization pulse from said video signal (CVBS) as said first signal component (1) and thereby generating said second test signal (1b) or said first test signal (1a).

10. Method according to any of the preceding claims, **characterized by**
calculating as a parameter value (D) the temporal drift of the rising edge of the first and/or second test signal (1a, 1b) regarding a given amplitude threshold (A) with respect to the temporal position of the synthetic horizontal synchronization pulse (Hsynthetic) of the compare signal (10).

11. Method according to any of the preceding claims, **characterized by**
calculating as a parameter value (D) the amplitude drift of the rising edge of the first and/or second test signal (1a, 1b) regarding a given distance (T) with respect to the temporal position of the synthetic horizontal synchronization pulse (Hsynthetic) of the compare signal (10).

12. Method according to any of the claims 10 or 11, **characterized by**
calculating a set of parameter values (D1, D2, D3, D4) according to a predefined set of temporal positions (t1, t2, t3, t4) within the input signal or video signal (CVBS).

13. Method according to claim 12, **characterized by**
using temporal positions which are distributed within a single video line signal, over several video line signals within a single image signal and/or over several image signals.

14. Method according to any of the preceding claims, **characterized by**
calculating and/or analyzing a convolution between said first and/or second test signal (1a, 1b) and said synthetic horizontal synchronization pulse (Hsynthetic).

15. Method according to any of the claims 12 to 14, **characterized by**
calculating from said set of parameter values (D1y, D2y) or from a series of subsets thereof statistical parameters, in particular parameters for the statistical variances (V1y, V2y) and/or the statistical standard deviations (σly, σ2y), or the like.

16. Method according to any of the preceding claims, **characterized by**
comparing said parameter values (D1y, D2y, V1y, V2y) to a predefined table of parameter values and thereby assigning to said parameter values (D1y, D2y, V1y, V2y) a set of adjusting parameters and/or algorithms for further processing to achieve best image quality.

17. Apparatus for generating a characterization measure for classifying video signals, in particular for carrying out the method according to any of the claims 1 to 15, comprising:
- a receiving section for receiving video signals (CVBS),
- a Hsync-slicer module (21) for deriving and separating a horizontal synchronization pulse (Hsync) from said video signal (CVBS) as a first test signal (1a),
- a color decoder and synchronization separator module (22) for deriving and separating at least a color carrier signal from said video signal (CVBS) as a second signal component (2),
**characterized by**
- a H-pulse generating section (23) for generating from said second signal component (2) a synthetic horizontal synchronization pulse (Hsynthetic) as a compare signal (10) and
- a comparison section (24) for comparing at least said first test signal (1a) with said compare signal (10) and for generating and providing parameter values (D1y, D2y, V1y, V2y) characterizing differences of the compared signals.

18. Apparatus according to claim 17, **characterized by**
said H-pulse generating section (23) comprising a highly stabilized phase locked loop module (25) for deriving temporal positions for said compare signal (10) to be generated and
said H-pulse generating section (23) further comprising a H-pulse generator (26) being triggered by said phase locked loop module (25) at said temporal positions to generate at each time said synthetic horizontal synchronization pulse (Hsynthetic) as said compare signal (10).

19. Apparatus according to any of the claims 17 or 18, **characterized by**
said color decoder and synchronization separator module (22) being adapted for deriving and separating a horizontal synchronization pulse (Hsync) from said video signal (CVBS) as a second test signal (1b).

20. Apparatus according to any of the claims 17 to 19, **characterized by**
said comparison section (24) comprising first and second rising edge deviation calculation units (27, 28) comparing said first and second test signals (1a, 1b) with said compare signal (10) and
said comparison section (24) further comprising first and second evaluation processors (29, 30) being assigned to said first and second calculation units (27, 28), respectively, for evaluating the comparison results and thereby for deriving a set of parameter values for characterizing the video signal (CVBS).
